# EUROPEAN PATENT SPECIFICATION

(11) **EP 1 031 537 B1**
(45) Date of publication and mention of the grant of the patent: **17.10.2007**
(21) Application number: 00103425.5
(22) Date of filing: 25.02.2000
(51) Int. Cl.: C01G 23/00, C09C 1/36

(54) **Yellow pigment**
Gelbes Pigment
Pigment jaune

(30) Priority: 26.02.1999 JP 5084999; 07.07.1999 JP 19264999; 28.12.1999 JP 37492999
(43) Date of publication of application: 30.08.2000
(73) Proprietor: KAO CORPORATION, Chuo-ku, Tokyo (JP)
(72) Inventor: Kinuta, Koji, Wakayama-shi,Wakayama-ken (JP); Narita, Masayuki, Wakayama-shi,Wakayama-ken (JP); Aosaki, Taisuke, Wakayama-shi,Wakayama-ken (JP); Sakaguchi, Mikio, Wakayama-shi,Wakayama-ken (JP)
(74) Representative: Vossius & Partner

(56) References cited:
- EP-A- 0 522 894
- EP-A- 0 604 919
- EP-A- 0 631 983
- US-A- 4 537 865

## Description

The present invention relates to a double oxide, a yellow pigment comprising the same, and a process for preparing the same. More specifically, the present invention relates to a double oxide which can be suitably used in pigment compositions, cosmetics and the like, a yellow pigment comprising the double oxide, and a process for preparing the double oxide.

Organic pigments have vivid colors, and kinds thereof are abundant, so that there are various ones having a wide variety of spectral reflective characteristics. However, many of the organic pigments generally are poor in stabilities for water resistance, solvent resistance, weathering resistance and heat resistance.

On the other hand, inorganic pigments are generally excellent in the above stabilities. However, their kinds are so few that the ones having various spectral reflective characteristics have not yet been obtained. As a yellow pigment, iron-based pigments such as α-FeOOH or iron oxide-titanium oxide sintered products are used from the aspects of stability and safety. However, among the spectral reflective characteristics of iron-based inorganic pigments, the wavelength at an inflection point is substantially independent from their shapes or particle diameters, and is an intrinsic value based on the pigment. In addition, the iron-based inorganic pigment has a* value of about 10 in hues indicated by L*, a* and b* colorimetric coordinates, and shows yellowish brown color to reddish brown color, so that the pigment lacks in its vividness. Therefore, when the iron-based yellow pigment having such characteristics is used in cosmetics, there arises a defect that no cosmetics can be obtained other than those having extremely limited spectral reflective characteristics.

In general, it has been well known that when a healthy skin is examined by a spectrophotometer, the resulting spectrum has an area formed below a straight line drawn between the reflectivities at 500 nm and 620 nm. Contrary to the above, it has been also well known that as the color of the skin becomes duller, the area becomes smaller.

Conventional cosmetics, particularly foundations, have an extremely small area formed below the straight line drawn between the reflectivities at 500 nm and 620 nm. Therefore, when applying such cosmetics to a skin, the area detected by a spectrophotometer at a wavelength region of 500 to 620 nm, which is inherently owned by the natural skin, becomes small. As a result, the spectral reflective spectrum of the skin to which such cosmetics are applied becomes similar to that of a dull color skin. Therefore, it is very difficult to form a foundation-applied skin having a natural and healthy appearance by using the conventional cosmetics. This is presumably caused by the yellow pigment having a wavelength of around 545 nm at an inflection point, which is made of a yellow iron oxide or a sintered product of iron oxide-titanium oxide.

Therefore, it has been desired to develop a yellow pigment having a wavelength at an inflection point, which makes the area formed below the straight line drawn between the reflectivities at 500 nm and 620 nm large.

As a yellow pigment having the optical characteristics described above, there is proposed chrome yellow (Cr-Pb-O) or titanium yellow (Ti-Ni-Sb-O). However, since these pigments contain harmful elements, they have a problem in safety. For the purpose of solving this problem, WO 98/55401 discloses a composition comprising MₓCe_{y}Ti_{z}Oₜ. However, the pigment obtained from this composition has a weak color strength due to its large particle diameter, and pH of a 10% by weight water dispersion of the pigment is very high such as not less than 10. Therefore, the pigment is not adequate to apply to human skin.

An object of the present invention is to provide a double oxide having a wavelength at an inflection point capable of making an area formed below a straight line drawn between the reflectivities at 500 nm and 620 nm large, and a yellow pigment comprising the same.

Another object of the present invention is to provide a process for preparing a double oxide having well controlled spectral reflective characteristics which can be suitably used for cosmetics, and the like.

According to the present invention, there is provided:
(1) a double oxide represented by the formula (I):

   CeTiₓCa_{y}O_{z} (I)

   wherein x is a number of 0.2 to 0.75, y is a number of 0 to 0.5, and z is a number satisfying 1 ≤ z ≤ 2+2x+y;
(2) a yellow pigment comprising the double oxide described above; and
(3) a process for preparing the double oxide represented by the above formula (I), comprising mixing a cerium compound, a titanium compound and optionally a calcium compound, and heating the resulting mixture at 300° to 1500°C in a non-oxidizing atmosphere.

In order to form a skin having a natural and healthy appearance, it has been desired to use a pigment which makes the area formed below a straight line drawn between the reflectivities at 500 nm and 620 nm large. In order to make the above area large, it is desirable that the wavelength at an inflection point is 450 to 520 nm, more preferably 470 to 500 nm, when measuring the reflectivities by a spectrophotometer. This wavelength at an inflection point within the region in which the reflectivities of the spectral reflectivity spectrum dramatically change (a wavelength showing a maximum value of a first differentiation derivative function of the spectral reflectivity spectrum) is simply referred to as "wavelength at an inflection point" hereinafter.

In order to obtain a double oxide having the above wavelength at an inflection point, in the double oxide represented by the formula (I), the molar ratio of Ti to Ce, i.e. Ti/Ce [as indicated by x in the formula (I)] is adjusted to 0.2 to 0.75; the molar ratio of Ca to Ce, i.e. Ca/Ce [as indicated by y in the formula (I)] is adjusted to 0 to 0.5; and the molar ratio of O to Ce, i.e. O/Ce [as indicated by z in the formula (I)] is adjusted to a number satisfying 1 ≤ z ≤ 2+2x+y.

Further, since the number of oxygen (O) atoms, i.e. z is a number showing a state of oxygen deficiency stoichiometrically, it is preferable that the main diffraction peaks are present in the X-ray diffraction pattern of the double oxide at the lattice distances (d) (the unit of which is Å (0.1 nm), hereinafter referred to the same) of 3.02 ± 0.05 and 3.06 ± 0.05. Here, the oxygen deficiency is obtained by determining a coordination number of oxygen from a satellite peak observed in XANES (X-ray absorption near edge structure) obtained from high resolution X-ray absorption spectrometry using, CeO₂ as a standard, which is a main component of the double oxide; and calculating the oxygen deficiency from the determined coordination number of oxygen and a coordination number of the standard CeO₂. This satellite peak is detected when electrons flow from oxygen (O) coordinated to Ce into a 4f orbital of Ce. The oxygen deficiency is preferably 2 to 20%, more preferably 5 to 20%.

In addition, it is preferable that the molar ratio of Ti/Ce is 0.25 to 0.65, and that the molar ratio of Ca/Ce is 0.01 to 0.3. It is more preferable that the molar ratio of Ti/Ce is 0.25 to 0.55, and that the molar ratio of Ca/Ce is 0.01 to 0.15.

The term "main diffraction peaks" existing in the X-ray diffraction pattern means either (A) the diffraction peaks having a diffraction intensity of 20 to 110 at the lattice distances (d) of 3.02 ± 0.05 and 3.06 ± 0.05 relative to 100 of the diffraction intensity of the diffraction peak at the lattice distance (d) of 2.476, which is a diffraction peak having the highest diffraction intensity of ZnO described in JCPDS 36-1451, or (B) the diffraction peaks having the intensity ratios (d = 3.02/ d = 3.12, and d = 3.06/d = 3.12) of diffraction intensities at the lattice distances (d) of 3.02 ± 0.05 and 3.06 ± 0.05 to those at the lattice distance (d) of 3.12 ± 0.03 of not less than 0.15, respectively, in the X-ray diffraction pattern of a mixture prepared by mixing a sample with ZnO, which is used as an internal standard sample for the X-ray diffraction in the NIST (National Institute of Standards and Technology, USA).

As the raw material of the double oxide, cerium compounds, titanium compounds and calcium compounds are used.

The purity of the raw material is preferably not less than 90%, more preferably not less than 95%, to avoid the formation of a product other than the double oxide represented by the formula (I) due to impurities, resulting in lowering of the hue. The volume-average particle diameter of each compound is preferably 0.01 to 10 µm, more preferably 0.1 to 5 µm, in order to homogeneously disperse these compounds when mixing.

The cerium compound includes powders of CeO₂, Ce₂O₃, and Ce(OH)₄. The titanium compound includes powders of TiO₂, TiO, titanium oxide having an oxidation number of less than 2, Ti(OH)₄, and the like. The calcium compound includes powders of CaCO₃, Ca(OH)₂ and CaO.

These raw materials can be used, for instance, as a homogeneous mixture of ceria sol, titania sol and the like, or a dried product thereof.

Besides the above materials, as the raw materials for cerium compounds, titanium compounds and calcium compounds, there can be used a hydroxide prepared by neutralizing an aqueous solution of a water-soluble cerium salt such as cerium chloride, cerium nitrate or ammonium cerium nitrate, a water-soluble titanium salt such as titanium chloride or titanyl sulfate, and a water-soluble calcium salt such as calcium chloride or calcium nitrate with an alkali such as sodium hydroxide, potassium hydroxide, lithium hydroxide or ammonia. In order to prevent the sedimentation of impurities during neutralization, the purity of each of these water-soluble compounds is preferably not less than 90%, more preferably not less than 95%.

Furthermore, when a sediment is formed, an organic acid can be used. The organic acid includes oxalic acid and citric acid, without being limited to these specified ones, as long as the double oxide represented by the formula (I) is formed by heating the formed sediment.

When a double oxide is obtained, first, the cerium compound, the titanium compound and the calcium compound are mixed together. The mixing is preferably carried out by a wet process. When the wet process is employed, the cerium compound, the titanium compound and the calcium compound can be homogeneously mixed in a short period of time, and the reduction of segregation can be achieved, thereby making it possible to remarkably reduce the amounts of the Ce component, the Ti component and the Ce component eluted from the resulting double oxide, as compared to the case where these compounds are mixed by a dry process.

When the wet process is employed, a compound having a carbon atom can be added to prevent the sintering of the particles of these compounds during the preparation of the double oxide. The compound having a carbon atom includes synthetic resins such as phenolic resins, and natural high molecular compounds such as starches and agar. It is preferable that the amount of the compound having a carbon atom is 0 to 5 parts by weight, based on 100 parts by weight of the total amount of the cerium compound, the titanium compound and the calcium compound, from the viewpoint of accelerating the preparation of the double oxide and effectively suppressing the sintering.

When the cerium compound, the titanium compound and the calcium compound are mixed together by a wet process, a solvent can be used. The solvent may be those exhibiting insolubility to the cerium compound, the titanium compound and the calcium compound. Examples of the solvent include ion-exchanged water, and organic solvents exhibiting insolubility to those compounds, such as ethanol.

An apparatus which can be used when the cerium compound, the titanium compound and the calcium compound are mixed together by a wet process includes a ball-mill, a vibration mill, a planetary ball-mill and an attritor, without limiting the present invention to those examples.

When the wet process is employed, the resulting slurry is dried to remove the solvent therefrom, and thereafter the resulting mixture is heated in a non-oxidizing atmosphere. It is preferable that the heating is carried out in the air after heating the mixture in a non-oxidizing atmosphere.

A drying process for drying the slurry is not limited to specified ones, and there can be employed a drying process generally used in the preparation of ceramics, inorganic compounds, and the like.

The heating temperature during heating the mixture in a non-oxidizing atmosphere is 300° to 1500°C, preferably 800° to 1400°C, more preferably 1100° to 1300°C, from the viewpoints of obtaining a desired double oxide and preventing sintering during heating. Incidentally, when the mixture is heated at a temperature exceeding 1500°C, a sintering phenomenon is observed, so that only powders having low dispersibility can be obtained even though the resulting mixture was finely powdered by pulverization.

The non-oxidizing atmosphere may be nitrogen gas, argon gas, helium gas, carbon dioxide gas, mixed gases thereof, or vacuum. The non-oxidizing atmosphere may be pressurized as occasion demands.

When the mixture is heated, the heating can be carried out by changing the kinds of gases or their compositions in each of the heating step, the temperature-maintaining step and the cooling step. For instance, the atmosphere can be vacuum in the heating step, and a non-oxidizing gas can be introduced into the atmosphere in the temperature-maintaining step and the cooling step.

When the mixture is heated in vacuum, the diffusion of oxygen atoms is depressed, and thereby the formation of a double oxide is delayed. On the other hand, since the growth of the particles would not be proceeded, primary particles become very fine. During the above heating, when a non-oxidizing gas is introduced into the atmosphere, only the formation of the double oxide can be accelerated without promoting the growth of particles. Therefore, there are advantageous merits that fine primary particles can be formed, whereby its color strength can be heightened, and that energy required for pulverization can be reduced.

It is preferable that the heating rate during heating in a non-oxidizing atmosphere is 200° to 2000°C/h, from the viewpoints of avoiding sintering and accelerating the formation of the double oxide. In particular, it is especially preferable that the heating rate is 400° to 1500°C/h, because very fine primary particles are formed, and sintering can be avoided, thereby giving a powder having excellent dispersibility.

Although the heating time (time period for maintaining the heating temperature) cannot be absolutely determined because it differs depending upon the heating temperature and the like, the heating time is usually 0.1 to 100 hours or so, preferably 1 to 10 hours or so.

After heating the mixture, the mixture is cooled to room temperature (about 25°C).

After heating the mixture in a non-oxidizing atmosphere, it is preferable that the mixture is heated in the air from the viewpoint of accelerating the oxidation of the mixture. The heating temperature during heating the mixture in the air is preferably 200° to 800°C, more preferably 400° to 600°C, from the viewpoints of accelerating the oxidation reaction and suppressing the formation of titanium oxide and cerium oxide.

The heating rate during heating in the air is preferably 100° to 1000°C/h, more preferably 300° to 800°C/h, from the viewpoint of preventing the fusion of the primary particles, thereby improving its dispersibility.

Although the heating time during heating the mixture in the air cannot be absolutely determined because it differs depending upon the heating temperature and the like, the heating time is usually 0.1 to 100 hours or so, preferably 1 to 10 hours or so.

After heating the mixture in the air, the mixture is cooled to room temperature (about 25°C)

The resulting product can be pulverized as occasion demands. Incidentally, when the primary particles are broken during pulverization of the product, a defect is caused in the internal portion of the primary particles, so that the crystallinity is lowered. Consequently, the hue of the double oxide itself changes, so that a* value and b* value of the hue expressed by L*, a* and b* colorimetric coordinates are lowered. Further, when the volume-average particle diameter is less than 0.3 µm, the light scattering becomes large, and the pigment is whitened, thereby making it undesirable as a color pigment. Therefore, it is preferable that the double oxide obtained by pulverization has a volume-average particle diameter of not less than 0.3 µm. In addition, it is preferable that the double oxide obtained by pulverization has a volume-average particle diameter of not more than 50 µm, from the viewpoints of improvements in dispersibility and texture. Therefore, it is desirable that the double oxide has a volume-average particle diameter of 0.01 to 50 µm, preferably 0.05 to 5 µm, more preferably 0.3 to 4 µm, from the viewpoints of improvements in color strength, dispersibility and texture. The volume-average particle diameter is determined by a laser scattering particle diameter distribution analyzer commercially available from HORIBA Ltd. under the model number of "LA-700."

In order to obtain a double oxide having a desired volume-average particle diameter by pulverizing the product without breaking the primary particles as described above, it is preferable to employ a pulverizer capable of adjusting a time period for retaining the product in the pulverizer, for instance, a jet mill as in the case of a dry process, or a dyno mill as in the case of a wet process. When these pulverizers are used, the color strength can be improved without causing changes in the hue due to pulverization. In particular, when the pulverization is carried out by a wet process, there are advantageous merits that a surface-treatment agent, or the like can be added to a slurry after pulverization, and thereby additional functions such as water repellency can be imparted to the resulting powder.

Subsequently, when the particles of the resulting double oxide are classified and the particle diameter is adjusted, the color strength can be further improved.

Concretely, when the particles are classified so that the particles are composed of particles having a particle diameter of less than 0.3 µm at a frequency of not more than 30%, particles having a particle diameter of not less than 0.3 µm and less than 2 µm at a frequency of not less than 40%, and particles having a particle diameter of not less than 2 µm at a frequency of not more than 30%, the color strength can be further improved. It is more preferable that the particles are composed of particles having a particle diameter of less than 0.3 µm at a frequency of not more than 25%, particles having a particle diameter of not less than 0.3 µm and less than 2 µm at a frequency of not less than 50%, and particles having a particle diameter of not less than 2 µm at a frequency of not more than 25%. The frequency of the particles can be determined by a laser scattering particle diameter distribution analyzer, or the like.

As a process for classifying the particles of the double oxide, there can be employed a classifying process generally usable for ceramics, inorganic compounds, and the like.

The double oxide thus classified to have a desired particle diameter is controlled in its spectral reflective characteristics and excellent in dispersibility and have crystallinity, and Ce, Ti and Ca are not substantially eluted therefrom. Accordingly, the double oxide can be used in various pigment compositions, cosmetics and the like as a yellow pigment having excellent weathering resistance and fade resistance in an appropriate amount.

In addition, pH of the water dispersion containing 10% by weight of the double oxide of the present invention is within a weak acidic range of 3.5 to 5.5. Therefore, for instance, when the double oxide is applied to skin in the form of cosmetics, irritability would not be imparted to skin. Also, when the double oxide is used in a pigment composition for paints and the like, the double oxide would not impair the properties of the composition.

Also, since the resulting double oxide has a* value of -20 to 0 and b* value of 40 to 70 in the L*, a* and b* colorimetric coordinates, the double oxide is not reddish and shows a vivid hue as compared with conventional iron oxide yellow pigments.

When the double oxide of the present invention is used as a yellow pigment usable for cosmetics, paints and the like, the double oxide can be used as a pigment composition by mixing it with other pigments such as an organic color pigment, an inorganic color pigment, an inorganic extender, and the like. As other pigments, there can be cited, for instance, powders of iron oxide, titanium oxide, zinc oxide, barium sulfate, mica, silica, and the like.

### EXAMPLES

### Example 1

Each ingredient for a starting material powder was weighed to make up a total amount of 100 g in a proportion of 80.462 g of CeO₂, 18.672 g of TiO₂ and 0.866 g of Ca(OH)₂, so that the Ti/Ce molar ratio was 0.5, and the Ca/Ce molar ratio was 0.025. A 500-mL ball-mill pot made of ZrO₂ was charged with the resulting starting material powder, and a twenty four-hour mixing was conducted to the powder with 1000 g of balls made of ZrO₂ having a diameter of 5 mm and 150 g of ethanol as a solvent to form a slurry. Thereafter, the resulting slurry was separated from the balls, and ethanol contained in the slurry was distilled off to give a homogeneous mixture of CeO₂-TiO₂-Ca(OH)₂. The mixture was heated in an electric furnace at 1200°C for five hours in N₂ atmosphere, and thereafter heated at 600°C for one hour in the air, to give a double oxide.

The resulting double oxide was subjected to elemental analysis in accordance with the following elemental analysis method. As a result, it was confirmed that the double oxide had the above formula (I), in which x was 0.5 and y was 0.025.

### Elemental Analysis Method

A beaker made of fluorocarbon resin is charged with 0.1 g of a sample powder (double oxide) and 2 mL of sulfuric acid (special grade chemical), and the ingredients are heated to 200° to 300°C. With cooling the mixture to room temperature, aqueous hydrogen peroxide (special grade chemical) and nitric acid (special grade chemical) are added in appropriate amounts until the dissolution of the sample powder can be visibly confirmed. After the sample powder is completely dissolved, the resulting solution is diluted with ion-exchanged water, and the dilute solution is subjected to quantitative analysis using an ICP emission spectrophotometer commercially available from Shimadzu Corporation under model number of "Model ICPS100III."

Next, pH of a water dispersion containing 10% of the resulting double oxide was measured by the following method. As a result, pH was found to be 4.5.

### Method for Measuring pH of Water Dispersion Containing 10% of Double Oxide (The same method was employed in the subsequent Examples and Comparative Examples.)]

To 3.0 g of a double oxide was added 30 mL of previously boiled and cooled water at 25°C, and the mixture was thoroughly stirred for 2 minutes. Thereafter, the mixture was allowed to stand for 30 minutes, and pH of the supernatant of the mixture was measured with a pH meter at 25°C.

As the physical properties of the resulting double oxides, optical properties (spectral reflective characteristics), X-ray diffraction, and volume-average particle diameter were measured in accordance with the following methods. The results are shown below.

### Optical Properties (Spectral Reflective Characteristics)

A cell for measurement is charged with 1.0 g of a sample powder (double oxide), and its spectral reflective spectrum is measured within the visible region of 380 to 780 nm by a spectrophotometer commercially available from Hitachi, Ltd. under the model number of "U-4000" with correction using a standard white plate. The spectral reflective spectrum is obtained as a function of wavelength, and the obtained function is differentiated. The wavelength showing a maximum value is regarded as a wavelength at an inflection point.

In addition, L*, a* and b* are calculated using a hue analysis program of the spectrophotometer.

### Volume-Average Particle Diameter

The volume-average particle diameter is determined by a laser scattering particle diameter distribution analyzer commercially available from HORIBA Ltd. under the model number of "LA-700."

### X-Ray Diffraction

The X-ray diffraction is determined by a powder X-ray diffractometer commercially available from Rigaku Denki K.K. under the trade name of "Geiger Flex RAD-RC" [CuK α₁ ray, counter cathode: Cu, filter: monochromator, tube voltage: 40 kV, tube current: 80 mA, scanning speed: 10°/min].

### (Determination Results)

(1) Optical Properties (Spectral Reflective Characteristics)
   Inflection Point: 475 nm
   a* Value: -13.2
   b* Value: 53.8
(2) X-Ray Diffraction
   ① Main diffraction peak existing at lattice distances d = 3.02 and d= 3.06;
   ②Peak diffraction intensities at lattice distances d = 3.06 and d= 3.02 being 45.5 and 55.6, respectively, relative to 100 of the main diffraction intensity of ZnO; and
   ③ Ratios of the diffraction peaks d3.06/d3.12 and d3.02/d3.12 being 6.47 and 5.73, respectively.
(3) Volume-average particle diameter: 0.46 µm.

### Example 2

The same procedures as in Example 1 were carried out except for adding an amount converted to carbon basis of 1 g ethanol-soluble phenolic resin having an actual carbon ratio of 50% to 100 g of the starting material powder, to give a double oxide.

As a result of the elemental analysis, it was confirmed that the resulting double oxide had the above formula (I), in which x was 0.5 and y was 0.025.

The resulting double oxide had an inflection point at the wavelength of 475 nm, and a* value of -13.1 and b* value of 52.8. As a result of X-ray diffraction, the double oxide had main diffraction peaks at d = 3.02 and d = 3.06, and the diffraction intensity of the diffraction peaks at lattice distances d = 3.06 and d= 3.02 were 47.6 and 56.4, respectively, relative to 100 of the main peak diffraction intensity of ZnO. The ratios of the diffraction peaks d3.06/d3.12 and d3.02/d3.12 were 7.27 and 6.72, respectively. The volume-average particle diameter was 0.45 µm, and pH of a water dispersion containing 10% of the double oxide was 4.5.

### Example 3

The same procedures as in Example 1 were carried out except for changing the atmosphere during heating at 1200°C for 5 hours to Ar, to give a double oxide.

As a result of the elemental analysis, it was confirmed that the resulting double oxide had the above formula (I), in which x was 0.5 and y was 0.025.

The resulting double oxide had an inflection point at the wavelength of 480 nm, and a* value of -13.2 and b* value of 57.5. As a result of the X-ray diffraction, the double oxide had a main diffraction peak at d = 3.06 and d= 3.03, and the diffraction intensity of the diffraction peaks at lattice distances d = 3.06 and d= 3.03 were 66.1 and 70.1, respectively, relative to 100 of the main peak diffraction intensity of ZnO. The ratios of the diffraction peaks d3.06/d3.12 and d3.03/d3.12 were 15.09 and 14.21, respectively. The volume-average particle diameter was 1.42 µm, and pH of a water dispersion containing 10% of the double oxide was 4.5.

### Example 4

The same procedures as in Example 1 were carried out except for adjusting the Ti/Ce molar ratio to 0.25 and the Ca/Ce molar ratio to 0.05, to give a double oxide.

As a result of the elemental analysis, it was confirmed that the resulting double oxide had the above formula (I), in which x was 0.5 and y was 0.025.

The resulting double oxide had an inflection point at a wavelength of 472 nm, and a* value of -10.6 and b* value of 46.6. As a result of the X-ray diffraction, the double oxide had main peaks at d = 3.06 and d= 3.02, and the diffraction intensity of the diffraction peaks at lattice distances d = 3.02 and d= 3.06 were 23.2 and 23.6, respectively. The ratios of the diffraction peaks d3.06/d3.12 and d3.02/d3.12 were 0.33 and 0.32, respectively, relative to 100 of the main peak diffraction intensity of ZnO. The volume-average particle diameter was 0.48 µm, and pH of a water dispersion containing 10% of the double oxide was 4.8.

### Example 5

Each ingredient for a starting material powder was weighed to make up a total amount of 500 g in a proportion of 402.33 g of CeO₂ (purity: 99%, volume-average particle diameter: 0.5 µm), 93.34 g of TiO₂ (purity: 99%, volume-average particle diameter: 0.3 µm), and 4.33 g of Ca(OH)₂ (purity: 98%, volume-average particle diameter: 3 µm), so that the Ti/Ce molar ratio was 0.5, and the Ca/Ce molar ratio was 0.025. A 3000-cm³ vibrating ball-mill pot made of zirconia was charged with the resulting starting material powder, and a fourteen-hour mixing was conducted to the powder with 3600 g of balls made of zirconia having a diameter of 5 mm and 1500 g of ethanol as a solvent to form a slurry.

Thereafter, the resulting slurry was separated from the balls, and the solvent contained in the slurry was distilled off to give a homogeneous powdery mixture of CeO₂-TiO₂-Ca (OH) ₂.

The temperature of the resulting homogeneous mixture was raised to 1200°C by using an electric furnace in N₂ atmosphere, and the temperature was kept at 1200°C for one hour. The heating rate during this heat treatment was 1200°C per one hour. Thereafter, the reaction mixture was heated at 600°C for one hour in the air. The heating rate during this heat treatment was 500°C per one hour, and cooled to room temperature (about 25°C).

A 1000-cm³ beads mill pot was charged with 60 g of the resulting product, 1000 g of beads made of zirconia having a diameter of 0.3 mm and 180 g of ethanol, and the product was pulverized at 1,500 rpm for 5 minutes. Thereafter, the resulting powdery slurry was separated from the balls, and classified by centrifugation. The powdery slurry was dried to give a double oxide.

It was confirmed that the resulting double oxide had the above formula (I), in which x was 0.5 and y was 0.025.

As to the optical characteristics of the resulting double oxide, the double oxide has an inflection point at the wavelength of 476 nm, and a* value of -13.1 and b* value of 56.0.

The volume-average particle diameter was determined by a laser scattering particle diameter distribution analyzer commercially available from HORIBA Ltd. under the model number of "LA-700." As a result, it was found that the volume-average particle diameter was 0.65 µm. The particles were composed of particles having a particle diameter of less than 0.3 µm at a frequency of 18.0%, particles having a particle diameter of not less than 0.3 µm and less than 2 µm at a frequency of 68.2%, and particles having a particle diameter of not less than 2 µm at a frequency of 13.8%.

### Example 6

The same procedures as in Example 5 were carried out except for heating *in vacuo* during raising the temperature to 1200°C, and carrying out the operations subsequent to raising the temperature to 1200°C by introducing N₂ gas.

The resulting double oxide was subjected to elemental analysis. As a result, it was confirmed that the double oxide had the above formula (I), in which x was 0.5 and y was 0.025.

As to the optical characteristics of the resulting double oxide, the double oxide has an inflection point at the wavelength of 474 nm, and a* value of -13.7 and b* value of 55.8. The volume-average particle diameter was found to be 0.48 µm. The particles were composed of particles having a particle diameter of less than 0.3 µm at a frequency of 18.9%, particles having a particle diameter of not less than 0.3 µm and less than 2 µm at a frequency of 66.3%, and particles having a particle diameter of not less than 2 µm at a frequency of 14.8%.

### Example 7

Each ingredient for a starting material powder was weighed to make up a total amount of 1000 g in a proportion of 802.22 g of CeO₂ powder, 186.12 g of TiO₂ powder, and 11.66 g of CaCO₃ powder (purity: 98%, volume-average particle diameter: 3 µm), so that the Ti/Ce molar ratio was 0.5, and the Ca/Ce molar ratio was 0.025. A 3000-cm³ vibrating ball-mill pot made of zirconia was charged with the resulting starting material powder, and a fourteen-hour mixing was conducted to the powder with 3600 g of balls made of zirconia having a diameter of 5 mm and 1500 g of ion-exchanged water and 25 g of a surfactant commercially available from Kao Corporation under the trade name of "Poise 532A" to form a slurry.

Thereafter, the resulting slurry was separated from the balls, and dried to give a homogeneous doughy mixture of CeO₂-TiO₂-CaCO₃. The resulting homogeneous mixture was disintegrated.

The resulting homogeneous mixture powder was heated at 1100°C by using an electric furnace in N₂ atmosphere for five hours. The heating rate during this heat treatment was 400°C per one hour. Thereafter, the mixture was cooled to room temperature (about 25°C), and thereafter heated at 600°C for one hour in the air. The heating rate during this heat treatment was 500°C per one hour. After the termination of heating, the product was cooled to room temperature (about 25°C), to give a double oxide.

The double oxide was subjected to elemental analysis. As a result, it was confirmed that the double oxide had the above formula (I), in which x was 0.5 and y was 0.025.

As to the optical characteristics of the resulting double oxide, the double oxide has an inflection point at the wavelength of 472 nm, and a* value of -11.5 and b* value of 52.3. The volume-average particle diameter was found to be 0.63 µm. The particles were composed of particles having a particle diameter of less than 0.3 µm at a frequency of 20.8%, particles having a particle diameter of not less than 0.3 µm and less than 2 µm at a frequency of 68.4%, and particles having a particle diameter of not less than 2 µm at a frequency of 10.8%.

### Example 8

As a starting material, 458.97 g of CeO₂ sol (containing 15% of CeO₂), 266.27 g of TiO₂ sol (containing 6% of TiO₂), and 3.00 g of CaCO₃ were weighed, so that the Ti/Ce molar ratio was 0.5, and the Ca/Ce molar ratio was 0.075. A 2000-cm³ glass beaker was charged with the resulting mixture, and the mixture was stirred with a homomixer at 3500 rpm for 10 minutes, to form a slurry.

The resulting slurry was dried using a fluidized-bed dryer containing balls commercially available from OKAWARA MFG. CO., LTD. under the trade name of "SFD-Mini", to give a homogeneous powdery mixture of CeO₂-TiO₂-CaCO₃.

The mixture was heated at 1200°C for one hour in an electric furnace. When the heating was carried out, the temperature was raised to 1200°C *in vacuo*, and the operations subsequent to raising the temperature to 1200°C were carried out in N₂ atmosphere. The heating rate during this heat treatment was 1200°C per one hour. Thereafter, the resulting reaction mixture was heated at 600°C for one hour in the air. The heating rate during this heat treatment was 500°C per one hour.

The resulting product was pulverized by using a jet mill commercially available from SEISHIN ENTERPRISE CO., LTD. under the trade name of "Co-Jet System Model αMark III." The powder after pulverization was dispersed in an ethanol solution, and classified by centrifugation. Thereafter, the slurry was dried to give a double oxide.

The resulting double oxide was subjected to elemental analysis. As a result, it was confirmed that the double oxide had the above formula (I), in which x was 0.5 and y was 0.075.

As to the optical characteristics of the resulting double oxide, the double oxide has an inflection point at the wavelength of 485 nm, and a* value of -9.3 and b* value of 57.9. The volume-average particle diameter was found to be 0.58 µm. The particles were composed of particles having a particle diameter of less than 0.3 µm at a frequency of 15.7%, particles having a particle diameter of not less than 0.3 µm and less than 2 µm at a frequency of 66.8%, and particles having a particle diameter of not less than 2 µm at a frequency of 17.5%.

### Comparative Example 1

Yellow iron oxide is excellent in safety and has been most widely used as a yellow pigment. The yellow iron oxide had an inflection point at the wavelength of 545 nm, and a* value of 5.6 and b* value of 51.2. The volume-average particle diameter was 0.3 µm, and pH of a water dispersion containing 10% of the double oxide was 5.5.

### Comparative Example 2

A sintered product of iron oxide-titanium oxide had an inflection point at the wavelength of 545 nm, and a* value of 13.5 and b* value of 43.1. The volume-average particle diameter was 0.32 µm, and pH of a water dispersion containing 10% of the double oxide was 7.5.

### Comparative Example 3

A pigment made of a composition of MₓCe_{y}Ti_{z}Oₜ, wherein x is 0.17, y is 0.5, z is 0.33, and t is 1.745, disclosed in WO 98/55401 Pamphlet (1998) had an inflection point at the wavelength of 481 nm, and a* value of -6.9 and b* value of 39.7. The volume-average particle diameter was 5.87 µm, and pH of a water dispersion containing 10% of the double oxide was 10.2.

### Comparative Example 4

The same procedures as in Example 5 were carried out except that heating was carried out in the air in place of a non-oxidizing atmosphere.

As to the optical characteristics of the resulting double oxide, the double oxide has an inflection point at the wavelength of 661 nm, and a* value of 1.12 and b* value of 9.76. The volume-average particle diameter was found to be 0.53 µm. The particles were composed of particles having a particle diameter of less than 0.3 µm at a frequency of 32.1%, particles having a particle diameter of not less than 0.3 µm and less than 2 µm at a frequency of 25.2%, and particles having a particle diameter of not less than 2 µm at a frequency of 42.7%.

As explained above, the double oxide of the present invention and the yellow pigment comprising the double oxide have an inflection point which makes an area formed below a straight line drawn between the reflectivities at 500 nm and 620 nm in the spectral reflective spectrum large. Accordingly, the double oxide and the yellow pigment can be suitably used for pigment compositions, cosmetics, and the like.

In addition, according to the process of the present invention, there can be obtained a yellow pigment which can be suitably used for cosmetics since its spectral reflective characteristics are well controlled.

## Claims

1. A double oxide represented by the formula (I):
CeTiₓCa_{y}O_{z} (I)
wherein x is a number of 0.2 to 0.75, y is a number of 0 to 0.5, and z is a number satisfying 1 ≤ z ≤ 2+2x+y.

2. A yellow pigment comprising a double oxide represented by the formula (I) as defined in claim 1.

3. The yellow pigment according to claim 2, wherein said double oxide has an inflection point in the spectral reflective spectrum having a wavelength of 450 to 520 nm.

4. The yellow pigment according to claim 2 or 3, wherein said double oxide has a main diffraction peak in the X-ray diffraction pattern when the lattice distances d are 3.02 ± 0.05 and 3.06 ± 0.05.

5. The yellow pigment according to any one of claims 2 to 4, wherein said double oxide has a volume-average particle diameter of 0.01 to 50 µm.

6. The yellow pigment according to any one of claims 2 to 4, wherein pH of a water dispersion containing 10% by weight of the double oxide is within the range of 3.5 to 5.5.

7. A process for preparing a double oxide represented by the formula (I) as defined in claim 1,
wherein a cerium compound, a titanium compound, and optionally a calcium compound are mixed with each other, and the resulting mixture is heated at 300° to 1500°C in a non-oxidizing atmosphere.

8. The process according to claim 7, wherein a heating rate during heating in a non-oxidizing atmosphere is 200° to 2000°C/h.

9. The process according to claim 7 or 8, wherein the mixture is further heated in the air after the mixture is heated in the non-oxidizing atmosphere.

10. The process according to claim 9, wherein the heating temperature during heating in the air is 200° to 800°C.

11. A process for preparing a double oxide comprising pulverizing the double oxide obtained in the process according to any one of claims 7 to 10, and classifying the resulting powder into particles composed of (a) particles having a particle diameter of less than 0.3 µm at a frequency of not more than 30%, (b) particles having a particle diameter of not less than 0.3 µm and less than 2 µm at a frequency of not less than 40%, and (c) particles having a particle diameter of not less than 2 µm at a frequency of not more than 30%.

12. A yellow pigment comprising a double oxide obtainable by the process of claim 11, wherein L*, a*, b* colorimetric coordinates of the double oxide are a* = -20 to 0 and b* = 40 to 70.

## Patentansprüche

1. Doppeloxid der Formel (I):
CeTiₓCa_{y}O_{z} (I)
wobei x eine Zahl von 0,2 bis 0,75 ist, y eine Zahl von 0 bis 0,5 ist und z eine Zahl ist, die 1 ≤ z ≤ 2+2x+y erfüllt.

2. Gelbes Pigment, umfassend ein Doppeloxid der Formel (I) wie in Anspruch 1 definiert.

3. Gelbes Pigment gemäß Anspruch 2, wobei das Doppeloxid bei einer Wellenlänge von 450 bis 520 nm einen Wendepunkt im spektralen Reflexionsspektrum zeigt.

4. Gelbes Pigment gemäß Anspruch 2 oder 3, wobei das Doppeloxid einen Hauptbeugungspeak im Röntgenbeugungsdiagramm zeigt, wenn die Gitterabstände d 3,02 ± 0,05 und 3,06 ± 0,05 sind.

5. Gelbes Pigment gemäß einem der Ansprüche 2 bis 4, wobei das Doppeloxid einen volumengemittelten Teilchendurchmesser von 0,01 bis 50 µm besitzt.

6. Gelbes Pigment gemäß einem der Ansprüche 2 bis 4, wobei der pH-Wert einer Wasserdispersion, die 10 Gew.-% des Doppeloxids enthält, im Bereich von 3,5 bis 5,5 liegt.

7. Verfahren zur Herstellung eines Doppeloxids der Formel (I) wie in Anspruch 1 definiert, wobei eine Cerverbindung, eine Titanverbindung und gegebenenfalls eine Calciumverbindung miteinander gemischt werden und das resultierende Gemisch bei 300°C bis 1500°C in einer nicht oxidierenden Atmosphäre erhitzt wird.

8. Verfahren gemäß Anspruch 7, wobei die Aufheizgeschwindigkeit während des Erhitzens in einer nicht oxidierenden Atmosphäre 200 bis 2000°C/h beträgt.

9. Verfahren gemäß Anspruch 7 oder 8, wobei das Gemisch weiterhin an der Luft erhitzt wird, nachdem das Gemisch in der nicht oxidierenden Atmosphäre erhitzt wird.

10. Verfahren gemäß Anspruch 9, wobei die Erhitzungstemperatur während des Erhitzens an der Luft 200 bis 800°C beträgt.

11. Verfahren zur Herstellung eines Dopppeloxids, umfassend Pulverisieren des in dem Verfahren gemäß einem der Ansprüche 7 bis 10 erhaltenen Doppeloxids und Klassieren des resultierenden Pulvers in Teilchen, zusammengesetzt aus (a) Teilchen, die mit einer Häufigkeit von nicht mehr als 30% einen Teilchendurchmesser von weniger als 0,3 µm aufweisen, (b) Teilchen, die mit einer Häufigkeit von nicht weniger als 40% einen Teilchendurchmesser von nicht weniger als 0,3 µm und weniger als 2 µm aufweisen und (c) Teilchen, die mit einer Häufigkeit von nicht mehr als 30% einen Teilchendurchmesser von nicht weniger als 2 µm aufweisen.

12. Gelbes Pigment, umfassend ein Doppeloxid, erhältlich durch das Verfahren des Anspruchs 11, wobei die kolorimetrischen Koordinaten L*, a*, b* des Doppeloxids a* = -20 bis 0 und b* = 40 bis 70 sind.

## Revendications

1. Oxyde double représenté par la formule (I) :
CeTiₓCa_{y}O_{z} (I)
dans laquelle x est un nombre de 0,2 à 0,75, y est un nombre de 0 à 0,5, et z est un nombre satisfaisant la relation 1 ≤ z ≤ 2+2x+y.

2. Pigment jaune comprenant un oxyde double représenté par la formule (I) telle que définie dans la revendication 1.

3. Pigment jaune selon la revendication 2, dans lequel ledit oxyde double présente un point d'inflexion dans le spectre de réflexion spectrale ayant une longueur d'onde de 450 à 520 nm.

4. Pigment jaune selon la revendication 2 ou 3, dans lequel ledit oxyde double présente un pic de diffraction principal dans le diagramme de diffraction des rayons X quand les distances de réseau d sont de 3,02 ± 0,05 et 3,06 ± 0,05.

5. Pigment jaune selon l'une quelconque des revendications 2 à 4, dans lequel ledit oxyde double a un volume-diamètre de particule moyen de 0,01 à 50 µm.

6. Pigment jaune selon l'une quelconque des revendications 2 à 4, dans lequel le pH d'une dispersion aqueuse contenant 10 % en poids de l'oxyde double est dans la plage de 3,5 à 5,5.

7. Procédé de préparation d'un oxyde double représenté par la formule (I) telle que définie dans la revendication 1, dans lequel un composé de cérium, un composé de titane, et éventuellement un composé de calcium sont mélangés les uns avec les autres et le mélange résultant est chauffé à 300-1500°C dans une atmosphère non oxydante.

8. Procédé selon la revendication 7, dans lequel une vitesse de chauffage pendant le chauffage dans une atmosphère non oxydante est de 200 à 2000°C/h.

9. Procédé selon la revendication 7 ou 8, dans lequel le mélange est, en outre, chauffé dans l'air après que le mélange est chauffé dans l'atmosphère non oxydante.

10. Procédé selon la revendication 9, dans lequel la température de chauffage pendant le chauffage dans l'air est de 200 à 800°C.

11. Procédé de préparation d'un oxyde double comprenant la réduction en poudre fine de l'oxyde double obtenu dans le procédé selon l'une quelconque des revendications 7 à 10, et la classification de la poudre résultante en particules composées de (a) particules ayant un diamètre de particule inférieur à 0,3 µm à une fréquence non supérieure à 30 %, (b) particules ayant un diamètre de particule non inférieur à 0,3 µm et inférieur à 2 µm à une fréquence non inférieure à 40 %, et (c) particules ayant un diamètre de particule non inférieur à 2 µm à une fréquence non supérieure à 30 %.

12. Pigment jaune comprenant un oxyde double pouvant être obtenu par le procédé de la revendication 11, dans lequel les coordonnées colorimétriques L*, a*, b* de l'oxyde double sont a* = -20 à 0 et b* = 40 à 70.
